# FASCICULE DE BREVET EUROPEEN

(11) **EP 1 800 997 B1**
(45) Date de publication et mention de la délivrance du brevet: **27.01.2010**
(21) Numéro de dépôt: 06301176.1
(22) Date de dépôt: 24.11.2006
(51) Int. Cl.: B62D 21/07, B62D 21/15, B62D 25/20

(54) **Soubassement de véhicule automobile et véhicule correspondant**
Fahrzeugunterboden und Fahrzeug
Vehicle body floor and vehicle

(30) Priorité: 22.12.2005 FR 0554003
(43) Date de publication de la demande: 27.06.2007
(73) Titulaire: Renault SAS, 92100 Boulogne Billancourt (FR)
(72) Inventeur: Hlubina, Thierry, 92370 CHAVILLE (FR); Madeleine, Pierre, 78180 MONTIGNY LE BRETONNEUX (FR)

(56) Documents cités:
- WO-A-03/070543
- DE-A1- 3 302 235
- US-A1- 2003 164 623

## Description

La présente invention concerne un soubassement de véhicule automobile, ainsi qu'un véhicule automobile comprenant un tel soubassement.

En particulier, l'invention concerne un soubassement de véhicule automobile, du type comportant :
- au moins un longeron avant s'étendant longitudinalement vers l'arrière du véhicule, comprenant une extrémité avant et une extrémité arrière,
- au moins un longeron arrière s'étendant longitudinalement vers l'avant du véhicule et comprenant une extrémité avant et une extrémité arrière, dans lequel l'extrémité arrière du longeron avant et l'extrémité avant du longeron arrière sont prolongées vers les côtés latéraux du véhicule pour se solidariser sur un même élément de structure de caisse positionné latéralement, et dans lequel l'élément de structure de caisse latéral présente une zone sensiblement rectiligne apte à recevoir l'extrémité arrière du longeron avant et l'extrémité avant du longeron arrière.

Un soubassement de ce type est par exemple décrit dans la demande internationale de brevet WO 03/070543.

Un autre exemple de la technique antérieure est divulgué par le document DE3302235

Classiquement, un soubassement de véhicule, également appelée « structure sous plancher » comporte au moins deux longerons avant sensiblement parallèles et au moins deux longerons arrière sensiblement parallèles s'étendant sensiblement longitunalement sous l'habitacle du véhicule. Les longerons avant sont intégrés dans la structure avant du véhicule qui contient classiquement des éléments fonctionnels du véhicule tel que le groupe moto-propulseur. Ils présentent une extrémité avant de forme rectiligne disposée à une première hauteur qui est raccordée à l'habitacle par une partie intermédiaire inclinée permettant d'assurer la continuité entre l'extrémité avant et une extrémité arrière rectiligne passant sous l'habitacle et disposée à une deuxième hauteur inférieure à la première. Les longerons arrière, quant à eux, peuvent être rectilignes ou présenter un profil identique et supportent, par exemple, le plancher de chargement du véhicule.

Les longerons avant et arrière possèdent la fonction majeure de rigidifier la structure du véhicule et forment respectivement une voie avant d'absorption d'efforts lors de chocs frontaux et une voie arrière d'absorption d'efforts lors de chocs arrière. Ainsi, ceux-ci sont susceptibles de s'écraser sur une longueur plus ou moins importante lors d'un choc. Lorsque la déformation due à un choc frontal atteint l'extrémité arrière du longeron avant, l'absorption de l'énergie cinétique par compression du longeron ne peut plus s'effectuer dans de bonnes conditions et produit ainsi une intrusion de ladite partie arrière, non déformée dans l'habitacle, en particulier au niveau des pieds des passagers avant du véhicule. En effet, toute rupture de continuité est source de défaillance à la tenue d'un choc quel qu'il soit.

Pour remédier à ces inconvénients, l'invention propose une structure sous caisse du type décrit précédemment, qui comporte un agencement particulier des longerons avant et arrière permettant d'absorber des chocs frontaux et/ou arrière encore plus importants.

Dans ce but, le soubassement de l'invention, par ailleurs conforme à la définition générique qu'en donne la préambule ci-dessous, est essentiellement caractérisé en ce que la zone sensiblement rectiligne est une zone intermédiaire entre les longerons avant et arrière, ce qui permet d'assurer une continuité de parcours de longerons qui s'étendent sur toute la longueur du véhicule.

L'invention concerne également un véhicule automobile équipé d'un tel soubassement.

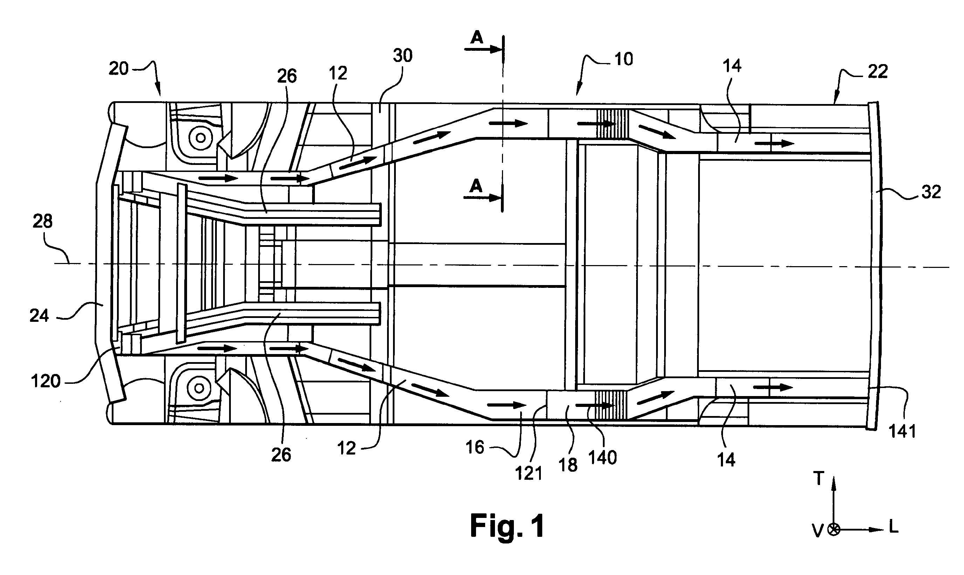

D'autres caractéristiques et avantages de l'invention apparaîtront à la lecture de la description détaillée dans laquelle on se reportera aux figures annexées dans lesquelles :
- la figure 1 représente une vue schématique de dessus du soubassement de véhicule automobile selon l'invention, et
- la figure 2 représente une section de la zone d'encastrement d'un longeron avant ou arrière avec un élément de structure de caisse latéral selon une coupe A-A représentée sur la figure 1.
   Les éléments communs aux différentes figures seront désignés par les mêmes références. On adoptera à titre non limitatif une orientation longitudinale, verticale et transversale selon l'orientation traditionnellement utilisée dans l'automobile et indiquée par le trièdre L, V, T des figures. Par ailleurs, on désignera les termes avant et arrière suivant le sens de marche traditionnel du véhicule. Enfin, les voies d'absorption d'efforts sont illustrées par des flèches sur la figure 1 .

De manière connue, un soubassement 10 de véhicule automobile comporte une partie avant 20 de structure de caisse destinée classiquement à accueillir les éléments fonctionnels du véhicule tel que le groupe moto-propulseur et une partie arrière 22 destinée entre autre à soutenir le plancher de chargement du véhicule. Les parties avant 20 et arrière 22 se trouvant longitudinalement de part et d'autre d'une cellule formant l'habitacle du véhicule.

La partie avant 20 comporte au moins deux longerons avant sensiblement longitudinaux qui sont réunis, par exemple, par une traverse avant 24. Chaque longeron 12 est par exemple réalisé par soudage d'au moins deux profilés longitudinaux emboutis adjacents ou, en variante, par un élément de profilé en aluminium. La partie avant 20 comporte également des longerons 26, formant ce que l'on appelle un berceau cadre, destinés à porter au moins un organe mécanique du véhicule, notamment un groupe motopropulseur du véhicule (non représenté). Les longerons 26 sont agencés transversalement entre les deux longerons avant 12. De la sorte, les longerons 26 délimitent transversalement un compartiment moteur du véhicule et se fixent sur une traverse 30 située en avant de l'habitacle.

Les longerons 12 sont des corps creux sensiblement longitudinaux et disposés sensiblement symétriquement de part et d'autre d'un plan médian 28 du véhicule. Ils présentent une extrémité avant 120 de forme rectiligne disposée à une première hauteur qui est raccordée à l'habitacle par une partie intermédiaire inclinée permettant d'assurer la continuité entre l'extrémité avant 120 et une extrémité arrière 121 passant sous l'habitacle et disposée à une deuxième hauteur inférieure à la première suivant un axe vertical V. L'extrémité arrière 121 est ainsi apte à passer sous le plancher de l'habitacle et est déviée latéralement de façon à se solidariser avec un élément de structure de caisse latéral 16 qui sera explicité plus tard dans la description.

La partie arrière 22 comprend au moins deux longerons 14 sensiblement longitudinaux qui sont réunis, par exemple, par une traverse arrière 32 permettant de rigidifier la structure de soubassement. Chaque longeron 14 est par exemple réalisé par soudage d'au moins deux profilés longitudinaux emboutis adjacents ou, en variante, par un élément de profilé en aluminium.

Les longerons 14 sont des corps creux sensiblement longitudinaux et disposés sensiblement symétriquement de part et d'autre du plan médian 28 du véhicule. Ils présentent, par exemple, une extrémité arrière 141 de forme rectiligne disposée à une troisième hauteur qui est raccordée à l'habitacle par une partie intermédiaire inclinée permettant d'assurer la continuité entre l'extrémité arrière 141 et une extrémité avant 140 passant sous l'habitacle et disposée à une quatrième hauteur inférieure à la première suivant un axe vertical V. La deuxième et la quatrième hauteur sont identiques. L'extrémité arrière 141 est ainsi apte à passer sous le plancher de l'habitacle et est déviée latéralement de façon à se solidariser avec ledit élément de structure de caisse latéral 16.

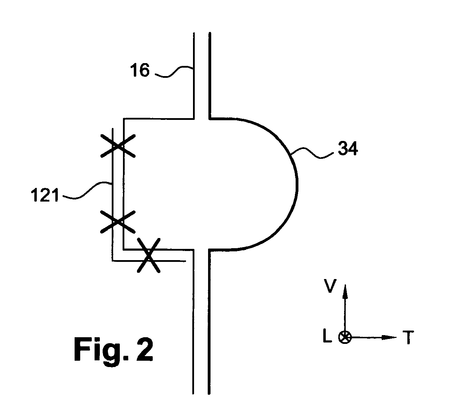

Tel qu'illustré sur la figure 2, l'élément de structure de caisse latéral 16 est un corps creux longitudinal disposé latéralement à ladite deuxième hauteur. C'est un élément de structure bas qui est disposé classiquement sous les ouvrants latéraux de véhicule et qui appartient au soubassement. Ledit élément 16 présente, par exemple, une section en U dont les branches dudit U sont orientées vers l'extérieur du véhicule. Plus précisément, il s'agit d'un élément de la structure de caisse 16 tel que le bavolet comportant une zone sensiblement rectiligne 18. Le bavolet 16 présente une telle zone 18, par exemple, au niveau du pied milieu du véhicule. Classiquement, le bavolet 16 est essentiel pour contrôler la flexion longitudinale et améliorer la raideur de la caisse et se trouve en vis d'un autre corps creux disposé sensiblement parallèlement au bavolet 16 tel qu'un côté de caisse 34.

Selon l'invention, l'extrémité arrière 121 du longeron 12 et l'extrémité avant 140 du longeron arrière 14 sont prolongés latéralement vers l'extérieur du véhicule pour se solidariser sur le même élément de structure de caisse 16 positionné latéralement. La solidarisation s'effectue sur la zone rectiligne 18 du bavolet 16, et plus précisément au niveau du pied milieu du véhicule par encastrement grâce au fait que lesdites extrémités des longerons 12 et 14 présentent une forme complémentaire du bavolet au niveau de l'encastrement. Ainsi, la zone de bavolet est une zone intermédiaire entre les longerons avant 12 et arrière 14 du véhicule, ce qui permet d'assurer une continuité de parcours de longerons qui s'étendent sur toute la longueur du véhicule.

Cette continuité de longerons présente de nombreux avantages comme par exemple, celui de faciliter la tenue au choc du véhicule. En effet, comme l'illustre la figure 1, les efforts générés par un choc frontal sont représentés par des flèches, ces efforts se propagent de manière continue sur toute la longueur du véhicule ce qui permet une moindre déformation des longerons avant ou arrière. En effet, l'absorption de l'énergie cinétique par compression du longeron s'effectue sur toute la longueur du véhicule et non pas seulement au niveau de la partie avant 20 comme c'est le cas actuellement lors d'un choc frontal. L'habitacle est alors moins sollicité lors d'un tel choc. Par ailleurs, le fait que les longerons 12 et 14 s'encastrent sur le bavolet 16 permet de renforcer la structure de caisse latérale et permet ainsi de sécuriser les occupants dans l'habitacle lors d'un choc latéral. En effet, l'encastrement de ces longerons 12 et 14 au niveau du pied milieu renforce le noeud de structure et le rend plus fort pour résister aux chocs latéraux.

En outre, la continuité de longerons présente de nombreux avantages comme celui de faciliter la modularité en longueur du véhicule. En effet, les longerons 12 et 14 peuvent se fixer sur l'élément de structure latérale 16 à n'importe quel niveau de la zone rectiligne 18 du bavolet 16, ceci permet ainsi d'augmenter ou de diminuer la longueur totale du véhicule.

L'invention n'est nullement limitée au mode de réalisation décrit et illustré qui n'a été donné qu'à titre d'exemple.

## Revendications

1. Soubassement (10) de véhicule automobile, du type comportant :
- au moins un longeron avant (12) s'étendant longitudinalement vers l'arrière du véhicule, comprenant une extrémité avant (120) et une extrémité arrière (121),
- au moins un longeron arrière (14) s'étendant longitudinalement vers l'avant du véhicule et comprenant une extrémité avant (140) et une extrémité arrière (141),
dans lequel l'extrémité arrière (121) du longeron avant (12) et l'extrémité avant (140) du longeron arrière (14) sont prolongées vers les côtés latéraux du véhicule pour se solidariser sur un même élément de structure de caisse (16) positionné latéralement, et dans lequel l'élément de structure de caisse (16) latéral présente une zone sensiblement rectiligne (18) apte à recevoir l'extrémité arrière (121) du longeron avant (12) et l'extrémité avant (140) du longeron arrière (14),
**caractérisé en ce que** la zone sensiblement rectiligne (18) est une zone intermédiaire entre les longerons avant (12) et arrière (14), ce qui permet d'assurer une continuité de parcours de longerons qui s'étendent sur toute la longueur du véhicule.

2. Soubassement selon la revendication 1, **caractérisé en ce que** la zone sensiblement rectiligne (18) de l'élément de structure de caisse (16) présente une continuité de section.

3. Soubassement selon l'une des revendications 1 ou 2,
**caractérisé en ce que** la zone sensiblement rectiligne (18) de l'élément de structure de caisse (16) présente une section en forme de U.

4. Soubassement selon la revendication 1, **caractérisé en ce que** la zone sensiblement rectiligne (18) de l'élément de structure de caisse (16) est la zone de rencontre de ce dernier avec le pied milieu du véhicule.

5. Soubassement selon la revendication 3, **caractérisé en ce que** l'extrémité arrière (121) du longeron avant (12) et l'extrémité avant (140) du longeron arrière (14) présentent une forme complémentaire à la section en forme de U de l'élément de structure de caisse (16) latéral.

6. Soubassement selon l'une quelconque des revendications précédentes, **caractérisé en ce que** chacun des longerons avant (12) et arrière (14) est rendu solidaire de l'élément de structure de caisse latéral (16) par encastrement.

7. Véhicule automobile équipé d'un soubassement selon l'une quelconque des revendications précédentes.

## Claims

1. Motor vehicle floorpan (10) of the type including:
- at least one front longitudinal member (12) extending longitudinally toward the rear of the vehicle and comprising a front end (120) and a rear end (121),
- at least one rear longitudinal member (14) extending longitudinally toward the front of the vehicle and comprising a front end (140) and a rear end (141),
wherein the rear end (121) of the front longitudinal member (12) and the front end (140) of the rear longitudinal member (14) are extended towards the lateral sides of the vehicle to be fastened to the same laterally positioned bodywork structural member (16) and the bodywork lateral structural member (16) has a substantially rectilinear area (18) adapted to receive the rear end (121) of the front longitudinal member (12) and the front end (140) of the rear longitudinal member (14),
**characterized in that** the substantially rectilinear area (18) is an intermediate area between the front longitudinal member (12) and the rear longitudinal member (14) which ensures continuity of the longitudinal members, which extend the whole length of the vehicle.

2. Floorpan according to Claim 1, **characterized in that** the substantially rectilinear area (18) of the bodywork structural member (16) is of continuous section.

3. Floorpan according to either of Claims 1 or 2, **characterized in that** the substantially rectilinear area (18) of the bodywork structural member (16) has a U-shaped section.

4. Floorpan according to Claim 1, **characterized in that** the substantially rectilinear area (18) of the bodywork structural member (16) is the area in which the latter encounters the B pillar of the vehicle.

5. Floorpan according to Claim 3, **characterized in that** the rear end (121) of the front longitudinal member (12) and the front end (140) of the rear longitudinal member (14) have a shape complementary to the U-shaped section of the bodywork lateral structural member (16).

6. Floorpan according to any of the preceding claims, **characterized in that** the front longitudinal member (12) and the rear longitudinal member (14) are each built into the bodywork lateral structural member (16).

7. Automobile vehicle equipped with a floorpan according to any of the preceding claims.

## Patentansprüche

1. Unterboden (10) eines Kraftfahrzeugs von dem Typ, der aufweist:
- mindestens einen vorderen Längsträger (12), der sich in Längsrichtung zur Rückseite des Fahrzeugs erstreckt, mit einem vorderen Ende (120) und einem hinteren Ende (121),
- mindestens einen hinteren Längsträger (14), der sich in Längsrichtung zur Vorderseite des Fahrzeugs erstreckt und ein vorderes Ende (140) und ein hinteres Ende (141) aufweist,
wobei das hintere Ende (121) des vorderen Längsträgers (12) und das vordere Ende (140) des hinteren Längsträgers (14) zu den Seiten des Fahrzeugs verlängert sind, um sich fest mit dem gleichen seitlich positionierten Aufbau-Strukturelement (16) zu verbinden, und wobei das seitliche Aufbau-Strukturelement (16) eine im Wesentlichen geradlinige Zone (18) aufweist, die das hintere Ende (121) des vorderen Längsträgers (12) und das vordere Ende (140) des hinteren Längsträgers (14) aufnehmen kann,
**dadurch gekennzeichnet, dass** die im Wesentlichen geradlinige Zone (18) eine Zwischenzone zwischen dem vorderen (12) und hinteren Längsträger (14) ist, was es ermöglicht, eine Verlaufskontinuität von Längsträgern zu gewährleisten, die sich über die ganze Länge des Fahrzeugs erstrecken.

2. Unterboden nach Anspruch 1, **dadurch gekennzeichnet, dass** die im Wesentlichen geradlinige Zone (18) des Aufbau-Strukturelements (16) eine Querschnittskontinuität aufweist.

3. Unterboden nach einem der Ansprüche 1 oder 2, **dadurch gekennzeichnet, dass** die im Wesentlichen geradlinige Zone (18) des Aufbau-Strukturelements (16) einen U-förmigen Querschnitt aufweist.

4. Unterboden nach Anspruch 1, **dadurch gekennzeichnet, dass** die im Wesentlichen geradlinige Zone (18) des Aufbau-Strukturelements (16) die Zone des Zusammentreffens dieses letzteren mit der B-Säule des Fahrzeugs ist.

5. Unterboden nach Anspruch 3, **dadurch gekennzeichnet, dass** das hintere Ende (121) des vorderen Längsträgers (12) und das vordere Ende (140) des hinteren Längsträgers (14) eine zum U-förmigen Querschnitt des seitlichen Aufbau-Strukturelements (16) komplementäre Form haben.

6. Unterboden nach einem der vorhergehenden Ansprüche, **dadurch gekennzeichnet, dass** jeder der vorderen (12) und hinteren Längsträger (14) durch Einbettung fest mit dem seitlichen Aufbau-Strukturelement (16) verbunden wird.

7. Kraftfahrzeug, das mit einem Unterboden nach einem der vorhergehenden Ansprüche ausgestattet ist.
